# EUROPEAN PATENT SPECIFICATION

(11) **EP 2 652 905 B1**
(45) Date of publication and mention of the grant of the patent: **05.07.2017**
(21) Application number: 11810941.2
(22) Date of filing: 16.12.2011
(51) Int. Cl.: H04L 12/18, H04W 84/18, H04L 29/08

(54) **INCREASED COMMUNICATION OPPORTUNITIES WITH LOW-CONTACT NODES IN A COMPUTER NETWORK**
ERHÖHTE KOMMUNIKATIONSGELEGENHEITEN MIT NIEDRIGKONTAKTKNOTEN IN EINEM COMPUTERNETZ
OPPORTUNITÉS DE COMMUNICATION ACCRUES AVEC DES NUDS À FAIBLE CONTACT DANS UN RÉSEAU INFORMATIQUE

(30) Priority: 17.12.2010 US 971360
(43) Date of publication of application: 23.10.2013
(73) Proprietor: Cisco Technology, Inc., San Jose, CA 95134 (US)
(72) Inventor: VASSEUR, Jean-philippe, F-38410 Saint Martin D'Uriage (FR); SHAFFER, Shmuel, Palo Alto CA 94301 (US); SHETTY, Sandeep, Jay, San Jose CA 95136 (US)
(74) Representative: Kazi, Ilya
(86) International application number: PCT/US2011/065393
(87) International publication number: WO 2012/083125

(56) References cited:
- US-A1- 2007 268 856
- US-A1- 2007 268 856
- US-A1- 2007 281 641
- US-A1- 2007 281 641
- CHAO GUI ET AL: "Group communications in mobile ad hoc networks", COMPUTER, IEEE, US, vol. 37, no. 2, 1 February 2004 (2004-02-01), pages 52-59, XP011107130, ISSN: 0018-9162, DOI: 10.1109/MC.2004.1266296
- CHIH-MIN CHAO ET AL: "A Quorum-Based Energy-Saving MAC Protocol Design for Wireless Sensor Networks", IEEE TRANSACTIONS ON VEHICULAR TECHNOLOGY, IEEE SERVICE CENTER, PISCATAWAY, NJ, US, vol. 59, no. 2, 1 February 2010 (2010-02-01), pages 813-822, XP011296782, ISSN: 0018-9545
- WINTER T ET AL: "RPL: Routing Protocol for Low Power and Lossy Networks; draft-ietf-roll-rpl-00.txt", RPL: ROUTING PROTOCOL FOR LOW POWER AND LOSSY NETWORKS; DRAFT-IETF-ROLL-RPL-00.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, vol. roll, 3 August 2009 (2009-08-03), XP015063755, [retrieved on 2009-08-04]
- PATHAN A-S K ET AL: "An efficient routing protocol for mobile ad hoc networks with neighbor awareness and multicasting", E-TECH 2004 KARACHI, PAKISTAN 31 JULY 2004, PISCATAWAY, NJ, USA,IEEE, US, 1 January 2004 (2004-01-01), pages 97-100, XP010737956, DOI: 10.1109/ETECH.2004.1353851 ISBN: 978-0-7803-8655-6
- MOOI CHOO CHUAH ET AL: "Enhanced disruption and fault tolerant network architecture for bundle delivery", GLOBAL TELECOMMUNICATIONS CONFERENCE, 2005. GLOBECOM '05. IEEE ST. LOIUS, MO, USA 28 NOV.-2 DEC. 2005, PISCATAWAY, NJ, USA,IEEE, vol. 2, 28 November 2005 (2005-11-28), pages 807-812, XP010879205, DOI: 10.1109/GLOCOM.2005.1577751 ISBN: 978-0-7803-9414-8
- CHAO GUI ET AL: "Group communications in mobile ad hoc networks", COMPUTER, IEEE SERVICE CENTER, LOS ALAMITOS, CA, US, vol. 37, no. 2, 1 February 2004 (2004-02-01), pages 52-59, XP011107130, ISSN: 0018-9162, DOI: 10.1109/MC.2004.1266296
- CHIH-MIN CHAO ET AL: "A Quorum-Based Energy-Saving MAC Protocol Design for Wireless Sensor Networks", IEEE TRANSACTIONS ON VEHICULAR TECHNOLOGY, IEEE SERVICE CENTER, PISCATAWAY, NJ, US, vol. 59, no. 2, 1 February 2010 (2010-02-01), pages 813-822, XP011296782, ISSN: 0018-9545
- WINTER T ET AL: "RPL: Routing Protocol for Low Power and Lossy Networks; draft-ietf-roll-rpl-00.txt", RPL: ROUTING PROTOCOL FOR LOW POWER AND LOSSY NETWORKS; DRAFT-IETF-ROLL-RPL-00.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, vol. roll, 3 August 2009 (2009-08-03), XP015063755,
- PATHAN A-S K ET AL: "An efficient routing protocol for mobile ad hoc networks with neighbor awareness and multicasting", E-TECH 2004 KARACHI, PAKISTAN 31 JULY 2004, PISCATAWAY, NJ, USA,IEEE, US, 1 January 2004 (2004-01-01), pages 97-100, XP010737956, DOI: 10.1109/ETECH.2004.1353851 ISBN: 978-0-7803-8655-6
- MOOI CHOO CHUAH ET AL: "Enhanced disruption and fault tolerant network architecture for bundle delivery", GLOBAL TELECOMMUNICATIONS CONFERENCE, 2005. GLOBECOM '05. IEEE ST. LOIUS, MO, USA 28 NOV.-2 DEC. 2005, PISCATAWAY, NJ, USA,IEEE, vol. 2, 28 November 2005 (2005-11-28), pages 807-812, XP010879205, DOI: 10.1109/GLOCOM.2005.1577751 ISBN: 978-0-7803-9414-8

## Description

### TECHNICAL FIELD

The present disclosure relates generally to computer networks, and, more particularly, to management of directed acyclic graphs (DAGs) with low-contact nodes.

### BACKGROUND

Low power and Lossy Networks (LLNs), e.g., sensor networks, have a myriad of applications, such as Smart Grid and Smart Cities. Various challenges are presented with LLNs, such as lossy links, low bandwidth, battery operation, low memory and/or processing capability, etc. One example routing solution to LLN challenges is a protocol called Routing Protocol for LLNs or "RPL," which is a distance vector routing protocol that builds a Destination Oriented Directed Acyclic Graph (DODAG, or simply DAG) in addition to a set of features to bound the control traffic, support local (and slow) repair, etc. The RPL architecture provides a flexible method by which each node performs DODAG discovery, construction, and maintenance.

It is fairly common in LLNs to have a node that rarely communicates, yet that still must be reachable at any time. For instance, if this "low-contact" node is battery operated, then it is particularly detrimental to use a keep-alive mechanism to maintain the routing topology built by proactive (a priori) routing protocols (e.g., RPL). For example, when this node desires to send a packet, it wakes up and usually uses a preamble technique before sending the data packet. If the node detects that its previous link is unavailable at the time the data is being transmitted, it can switch to a backup parent or else trigger a repair.

The major issue is in the opposite direction, however, where if a node needs to send a packet to the low-contact node and the (previously operational) link to the low-contact node is broken. For instance, the low-contact node may change parents when it attempts to send an upward message and does not receive an acknowledgement (ACK). However, if the low-contact node's parent attempts to send a downward message over the broken link prior to the low-contact node changing parents, or if the grandparent of the low-contact node tries to send a message downward to its low-contact grandson node when the parent of the low-contact node is inoperable, neither node will be able to do so. In either of these instances, there is no way for the low-contact node to know, or to switch to a new parent since it is generally not aware of a packet destined to itself. Currently, the following two solutions to this problem are available: 1) force the low-contact node to send keep-alive messages to maintain an adjacency with its neighbor, which is usually not acceptable for battery operated nodes that do not send packets frequently; or 2) use a different approach based on reactive routing, which comes at the cost of flooding the entire network when searching for a new route, which is also not desirable.
CHAO GUI et al. "Group communications in mobile ad hoc networks", 1 February 2004, XP11107130 is a survey of approaches to group communications in mobile ad hoc networks and explores several potential solutions to the unique problems of wireless mobile communications.
Chih-Min Chao et al. "A Quorum-Based Energy-Saving MAC Protocol Design for Wireless Sensor Networks", 1 February 2010, XP 011296782 describes a quorum- ased medium access control (QMAC) protocol that enables sensor nodes to sleep longer under light loads.
Winter T et al. "Routing protocol for Low Power and Lossy Networks", IETF, 3 August 2009, XP015063755 describes the Routing Protocol for Low Power and Lossy Networks.
Pathan A-S K et al. "An efficient routing protocol for mobile ad hoc networks with neighbor awareness and multicasting", 28 November 2005, XP010737956 describes an efficient routing protocol for ad hoc networks.
Mooi Choo Chuah et al. "Enhanced disruption and fault tolerant network architecture for bundle delivery", 28 November 2005, XP010879205 described a generalized naming convention for the enchanced DTN architecture.
US 2007/281641describes a method and system for eliminating inefficiency caused by active-sleep mode switching in power saving through a sleep mode in a wireless mesh network.
US 2007/268856 describes embodiments relating to changing the role of a beacon broadcaster among nodes in a wireless network, such as a wireless meshed network.

### BRIEF DESCRIPTION OF THE DRAWINGS

The embodiments herein may be better understood by referring to the following description in conjunction with the accompanying drawings in which like reference numerals indicate identically or functionally similar elements, of which:
Fig. 1 illustrates an example computer network;
Fig. 2 illustrates an example network device/node;
Fig. 3 illustrates an example message;
Fig. 4 illustrates an example directed acyclic graph (DAG) in the computer network of Fig. 1;
Fig. 5 illustrates an example message exchange indicating low-contact node status;
Figs. 6A-B illustrate an example neighbor discovery message exchange;
Fig. 7 illustrates an example multicast tree in a DAG;
Fig. 8 illustrates an example transmission of traffic along the multicast tree;
Fig. 9 illustrates an example diverse multicast tree in a DAG;
Fig. 10 illustrates an example simplified procedure for increasing communication opportunity with low-contact nodes from the perspective of a particular node in the DAG (e.g., root node); and
Fig. 11 illustrates an example simplified procedure for increasing communication opportunity with low-contact nodes from the perspective of the low-contact node.

### DESCRIPTION OF EXAMPLE EMBODIMENTS

### Overview

According to one or more embodiments of the disclosure, a particular node (e.g., root node) in a directed acyclic graph (DAG) in a computer network may identify a low-contact (e.g., wireless) node in the DAG that is at risk of having an invalid path when attempts are made to reach the low-contact node. In response, the particular node may identify neighbors of the low-contact node, and may establish a multicast tree from the particular node to the low-contact node through a plurality of the neighbors to reach the low-contact node. When sending traffic to the low-contact node, the particular node sends the traffic on the multicast tree, wherein each of the plurality of neighbors attempts to forward the traffic to the low-contact node, thus dramatically increasing the chances of packet delivery.

According to one or more additional embodiments of the disclosure, a node may determine its status as a low-contact node in the DAG. As such, the low-contact node may identify its neighbors, and may transmit an indication to a root node that the node is a low-contact node, the indication having a list of the identified neighbors of the low-contact node. As such, the low-contact node may then receive traffic from one or more of the neighbors as multicast traffic, assuming at least one of the neighbors is still in communication with the low-contact node.

### Description

A computer network is a geographically distributed collection of nodes interconnected by communication links and segments for transporting data between end nodes, such as personal computers and workstations, or other devices, such as sensors, etc. Many types of networks are available, with the types ranging from local area networks (LANs) to wide area networks (WANs). LANs typically connect the nodes over dedicated private communications links located in the same general physical location, such as a building or campus. WANs, on the other hand, typically connect geographically dispersed nodes over long-distance communications links, such as common carrier telephone lines, optical lightpaths, synchronous optical networks (SONET), synchronous digital hierarchy (SDH) links, or Powerline Communications (PLC) such as IEEE 61334, CPL G3, Watt Pulse Communication (WPC), and others. In addition, a Mobile Ad-Hoc Network (MANET) is a kind of wireless ad-hoc network, which is generally considered a self-configuring network of mobile routes (and associated hosts) connected by wireless links, the union of which forms an arbitrary topology.

Smart object networks, such as sensor networks, in particular, are a specific type of network having spatially distributed autonomous devices such as sensors, actuators, etc., that cooperatively monitor physical or environmental conditions at different locations, such as, e.g., energy/power consumption, resource consumption (e.g., water/gas/etc. for advanced metering infrastructure or "AMI" applications) temperature, pressure, vibration, sound, radiation, motion, pollutants, etc. Other types of smart objects include actuators, e.g., responsible for turning on/off an engine or perform any other actions. Sensor networks, a type of smart object network, are typically wireless networks, though wired connections are also available. That is, in addition to one or more sensors, each sensor device (node) in a sensor network may generally be equipped with a radio transceiver or other communication port, a microcontroller, and an energy source, such as a battery. Generally, size and cost constraints on sensor nodes result in corresponding constraints on resources such as energy, memory, computational speed and bandwidth. Correspondingly, a reactive routing protocol may, though need not, be used in place of a proactive routing protocol for sensor networks.

In certain configurations, the sensors in a sensor network transmit their data, along with routing/relaying data from other sensors, to one or more centralized or distributed database management nodes that obtain the data for use with one or more associated applications. Alternatively (or in addition), certain sensor networks provide for mechanisms by which an interested subscriber (e.g., "sink") may specifically request data from devices in the network. In a "push mode," the sensors transmit their data to the sensor sink/subscriber without prompting, e.g., at a regular interval/frequency or in response to external triggers, such as alarm messages. Conversely, in a "pull mode," the sensor sink may specifically request that the sensors (e.g., specific sensors or all sensors) transmit their current data (or take a measurement, and transmit that result) to the sensor sink. (Those skilled in the art will appreciate the benefits and shortcomings of each mode, and both apply to the techniques described herein.)

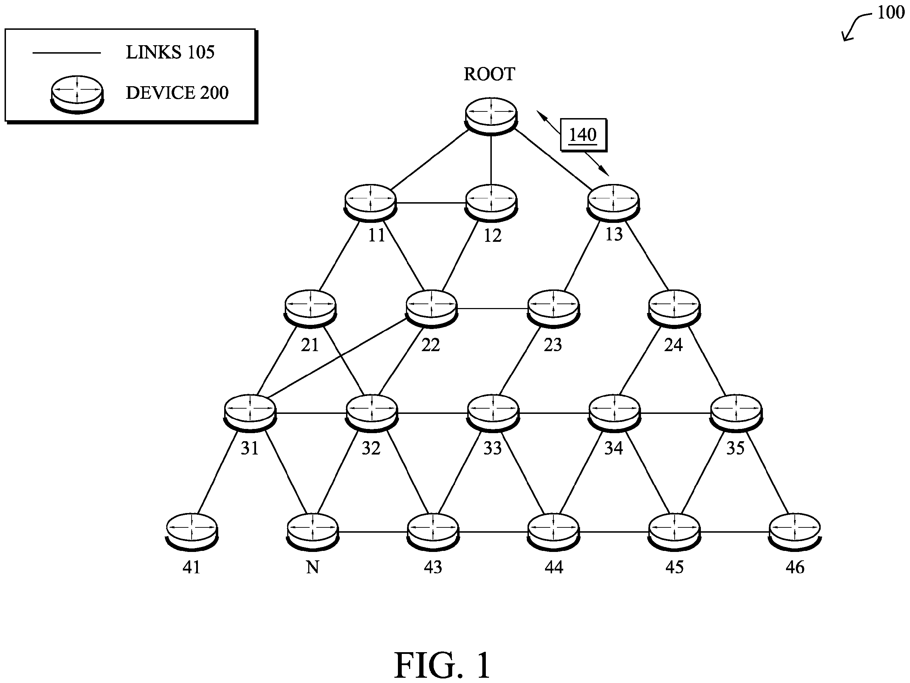

Fig. 1 is a schematic block diagram of an example computer network 100 illustratively comprising nodes/devices 200 (e.g., labeled as shown, "Root," "11," "12," ... "45," "46") interconnected by various methods of communication. For instance, the links 105 may be wired links or may comprise a wireless communication medium, where certain nodes 200, such as, e.g., routers, sensors, computers, etc., may be in communication with other nodes 200, e.g., based on distance, signal strength, current operational status, location, etc. Those skilled in the art will understand that any number of nodes, devices, links, etc. may be used in the computer network, and that the view shown herein is for simplicity. Also, while the embodiments are shown herein with reference to a generally "tree" shaped network, the description herein is not so limited, and may be applied to networks that have branches emitting to all directions from with the root node generally centralized among a plurality of surrounding nodes

Illustratively, certain devices in the network may be more capable than others, such as those devices having larger memories, sustainable non-battery power supplies, etc., versus those devices having minimal memory, battery power, etc. For instance certain devices 200 may have no or limited memory capability. Also, one or more of the devices 200 may be considered "root nodes/devices" (or root capable devices), also referred to as LLN border routers (LBRs), while one or more of the devices may also be considered "destination nodes/devices."

Data packets 140 (e.g., traffic and/or messages sent between the devices/nodes) may be exchanged among the nodes/devices of the computer network 100 using predefined network communication protocols such as the Transmission Control Protocol/Internet Protocol (TCP/IP), User Datagram Protocol (UDP), Multi-Protocol Label Switching (MPLS), various proprietary protocols, etc. In this context, a protocol consists of a set of rules defining how the nodes interact with each other. In addition, packets within the network 100 may be transmitted in a different manner depending upon device capabilities, such as source routed packets.

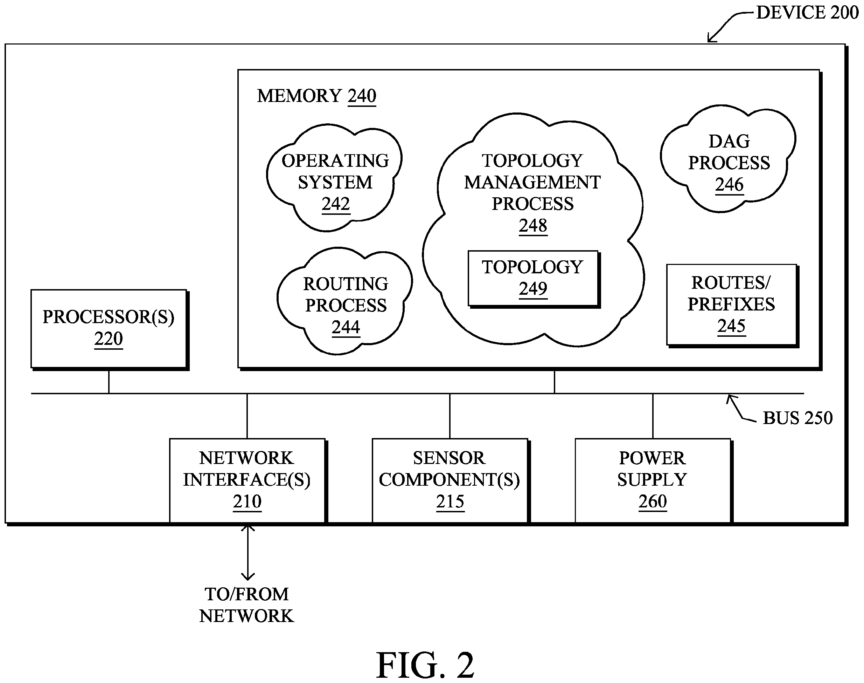

Fig. 2 is a schematic block diagram of an example node/device 200 that may be used with one or more embodiments described herein, e.g., as a root node or other node (e.g., sensor) in the network. The device may comprise one or more network interfaces 210, one or more sensor components 215 (e.g., sensors, actuators, etc.), at least one processor 220 (e.g., an 8-64 bit microcontroller), and a memory 240 interconnected by a system bus 250, as well as a power supply 260 (e.g., battery, plug-in, etc.). Notably, a root node need not contain a sensor component 215.

The network interface(s) 210 contain the mechanical, electrical, and signaling circuitry for communicating data over physical and/or wireless links coupled to the network 100. The network interfaces may be configured to transmit and/or receive data using a variety of different communication protocols, including, *inter alia*, TCP/IP, UDP, wireless protocols (e.g., IEEE Std. 802.15.4, WiFi, Bluetooth®,), Ethernet, powerline communication (PLC) protocols, etc. Note that the root may have two different types of network connections 210. Namely, one or more interfaces may be used to communicate with the mesh network (into the mesh cell), i.e., the other nodes shown in Fig. 1, while for the root node, another interface may be used as a WAN uplink network interface between the root node and, for example, a head-end device located through the WAN.

The memory 240 comprises a plurality of storage locations that are addressable by the processor 220 and the network interfaces 210 for storing software programs and data structures associated with the embodiments described herein. As noted above, certain devices may have limited memory or no memory (e.g., no memory for storage other than for programs/processes operating on the device). The processor 220 may comprise necessary elements or logic adapted to execute the software programs and manipulate the data structures, such as routes or prefixes 245 (notably on capable devices only). An operating system 242, portions of which are typically resident in memory 240 and executed by the processor, functionally organizes the device by, *inter alia*, invoking operations in support of software processes and/or services executing on the device. These software processes and/or services may comprise routing process/services 244, which may include an illustrative directed acyclic graph (DAG) process 246. Also, for root devices (or other management devices), a topology management process 248 and associated stored topologies 249 may also be present in memory 240, for use as described herein. It will be apparent to those skilled in the art that other processor and memory types, including various computer-readable media, may be used to store and execute program instructions pertaining to the techniques described herein. Also, while the description illustrates various processes, it is expressly contemplated that various processes may be embodied as modules configured to operate in accordance with the techniques herein (e.g., according to the functionality of a similar process).

Routing process (services) 244 contains computer executable instructions executed by the processor 220 to perform functions provided by one or more routing protocols, such as proactive or reactive routing protocols as will be understood by those skilled in the art. These functions may, on capable devices, be configured to manage a routing/forwarding table 245 containing, e.g., data used to make routing/forwarding decisions. In particular, in proactive routing, connectivity is discovered and known prior to computing routes to any destination in the network, e.g., link state routing such as Open Shortest Path First (OSPF), or Intermediate-System-to-Intermediate-System (ISIS), or Optimized Link State Routing (OLSR). Reactive routing, on the other hand, discovers neighbors (i.e., does not have an *a priori* knowledge of network topology), and in response to a needed route to a destination, sends a route request into the network to determine which neighboring node may be used to reach the desired destination. Example reactive routing protocols may comprise Ad-hoc On-demand Distance Vector (AODV), Dynamic Source Routing (DSR), DYnamic MANET On-demand Routing (DYMO), etc. Notably, on devices not capable or configured to store routing entries, routing process 244 may consist solely of providing mechanisms necessary for source routing techniques. That is, for source routing, other devices in the network can tell the less capable devices exactly where to send the packets, and the less capable devices simply forward the packets as directed.

Low power and Lossy Networks (LLNs), e.g., certain sensor networks, may be used in a myriad of applications such as for "Smart Grid" and "Smart Cities." A number of challenges in LLNs have been presented, such as:
1) Links are generally lossy, such that a Packet Delivery Rate/Ratio (PDR) can dramatically vary due to various sources of interferences, e.g., considerably affecting the bit error rate (BER);
2) Links are generally low bandwidth, such that control plane traffic must generally be bounded and negligible compared to the low rate data traffic;
3) There are a number of use cases that require specifying a set of link and node metrics, some of them being dynamic, thus requiring specific smoothing functions to avoid routing instability, considerably draining bandwidth and energy;
4) Constraint-routing may be required by some applications, e.g., to establish routing paths that will avoid non-encrypted links, nodes running low on energy, etc.;
5) Scale of the networks may become very large, e.g., on the order of several thousands to millions of nodes; and
6) Nodes may be constrained with a low memory, a reduced processing capability, a low power supply (e.g., battery).

In other words, LLNs are a class of network in which both the routers and their interconnect are constrained: LLN routers typically operate with constraints, e.g., processing power, memory, and/or energy (battery), and their interconnects are characterized by, illustratively, high loss rates, low data rates, and/or instability. LLNs are comprised of anything from a few dozen and up to thousands or even millions of LLN routers, and support point-to-point traffic (between devices inside the LLN), point-to-multipoint traffic (from a central control point to a subset of devices inside the LLN) and multipoint-to-point traffic (from devices inside the LLN towards a central control point).

An example protocol specified in an Internet Engineering Task Force (IETF) Internet Draft, entitled "RPL: IPv6 Routing Protocol for Low Power and Lossy Networks" <draft-ietf-roll-rpl-15> by Winter, at al. (November 11, 2010 version), provides a mechanism that supports multipoint-to-point (MP2P) traffic from devices inside the LLN towards a central control point (e.g., LLN Border Routers (LBRs) or "root nodes/devices" generally), as well as point-to-multipoint (P2MP) traffic from the central control point to the devices inside the LLN (and also point-to-point, or "P2P" traffic). RPL (pronounced "ripple") may generally be described as a distance vector routing protocol that builds a Directed Acyclic Graph (DAG) for use in routing traffic/packets 140, in addition to defining a set of features to bound the control traffic, support repair, etc.

A DAG is a directed graph having the property that all edges are oriented in such a way that no cycles (loops) are supposed to exist. All edges are contained in paths oriented toward and terminating at one or more root nodes (e.g., "clusterheads or "sinks"), often to interconnect the devices of the DAG with a larger infrastructure, such as the Internet, a wide area network, or other domain. In addition, a Destination Oriented DAG (DODAG) is a DAG rooted at a single destination, i.e., at a single DAG root with no outgoing edges. A "parent" of a particular node within a DAG is an immediate successor of the particular node on a path towards the DAG root, such that the parent has a lower "rank" than the particular node itself, where the rank of a node identifies the node's position with respect to a DAG root (e.g., the farther away a node is from a root, the higher is the rank of that node). Further, in certain embodiments, a sibling of a node within a DAG may be defined as any neighboring node which is located at the same rank within a DAG. Note that siblings do not necessarily share a common parent, and routes between siblings are generally not part of a DAG since there is no forward progress (their rank is the same). Note also that a tree is a kind of DAG, where each device/node in the DAG generally has one parent or one preferred parent.

DAGs may generally be built based on an Objective Function (OF). The role of the Objective Function is generally to specify rules on how to build the DAG (e.g. number of parents, backup parents, etc.).

In addition, one or more metrics/constraints may be advertised by the routing protocol to optimize the DAG against. Also, the routing protocol allows for including an optional set of constraints to compute a constrained path, such as if a link or a node does not satisfy a required constraint, it is "pruned" from the candidate list when computing the best path. (Alternatively, the constraints and metrics may be separated from the OF.) Additionally, the routing protocol may include a "goal" that defines a host or set of hosts, such as a host serving as a data collection point, or a gateway providing connectivity to an external infrastructure, where a DAG's primary objective is to have the devices within the DAG be able to reach the goal. In the case where a node is unable to comply with an objective function or does not understand or support the advertised metric, it may be configured to join a DAG as a leaf node. As used herein, the various metrics, constraints, policies, etc., are considered "DAG parameters."

Illustratively, example metrics used to select paths (e.g., preferred parents) may comprise cost, delay, latency, bandwidth, estimated transmission count (ETX), etc., while example constraints that may be placed on the route selection may comprise various reliability thresholds, restrictions on battery operation, multipath diversity, bandwidth requirements, transmission types (e.g., wired, wireless, etc.). The OF may provide rules defining the load balancing requirements, such as a number of selected parents (e.g., single parent trees or multi-parent DAGs). Notably, an example for how routing metrics and constraints may be obtained may be found in an IETF Internet Draft, entitled "Routing Metrics used for Path Calculation in Low Power and Lossy Networks" <draft-ietf-roll-routing-metrics-12> by Vasseur, et al. (November 10, 2010 version). Further, an example OF (e.g., a default OF) may be found in an IETF Internet Draft, entitled "RPL Objective Function 0" <draft-ietf-roll-of0-03> by Thubert (July 29, 2010 version).

Building a DAG may utilize a discovery mechanism to build a logical representation of the network, and route dissemination to establish state within the network so that routers know how to forward packets toward their ultimate destination. Note that a "router" refers to a device that can forward as well as generate traffic, while a "host" refers to a device that can generate but does not forward traffic. Also, a "lead" may be used to generally describe a non-router that is connected to a DAG by one or more routers, but cannot itself forward traffic received on the DAG to another router on the DAG. Control messages may be transmitted among the devices within the network for discovery and route dissemination when building a DAG.

According to the illustrative RPL protocol, a DODAG Information Object (DIO) is a type of DAG discovery message that carries information that allows a node to discover a RPL Instance, learn its configuration parameters, select a DODAG parent set, and maintain the upward routing topology. In addition, a Destination Advertisement Object (DAO) is a type of DAG discovery reply message that conveys destination information upwards along the DODAG so that a DODAG root (and other intermediate nodes) can provision downward routes. A DAO message includes prefix information to identify destinations, a capability to record routes in support of source routing, and information to determine the freshness of a particular advertisement. Notably, "upward" or "up" paths are routes that lead in the direction from leaf nodes towards DAG roots, e.g., following the orientation of the edges within the DAG. Conversely, "downward" or "down" paths are routes that lead in the direction from DAG roots towards leaf nodes, e.g., generally going in the opposite direction to the upward messages within the DAG.

Generally, a DAG discovery request (e.g., DIO) message is transmitted from the root device(s) of the DAG downward toward the leaves, informing each successive receiving device how to reach the root device (that is, from where the request is received is generally the direction of the root). Accordingly, a DAG is created in the upward direction toward the root device. The DAG discovery reply (e.g., DAO) may then be returned from the leaves to the root device(s) (unless unnecessary, such as for UP flows only), informing each successive receiving device in the other direction how to reach the leaves for downward routes. This process helps build routing tables to send downward messages to any node in the DAG and not only to the leafs. Nodes that are capable of maintaining routing state may aggregate routes from DAO messages that they receive before transmitting a DAO message. Nodes that are not capable of maintaining routing state, however, may attach a next-hop parent address. The DAO message is then sent directly to the DODAG root that can in turn build the topology and locally compute downward routes to all nodes in the DODAG. Such nodes are then reachable using source routing techniques over regions of the DAG that are incapable of storing downward routing state.

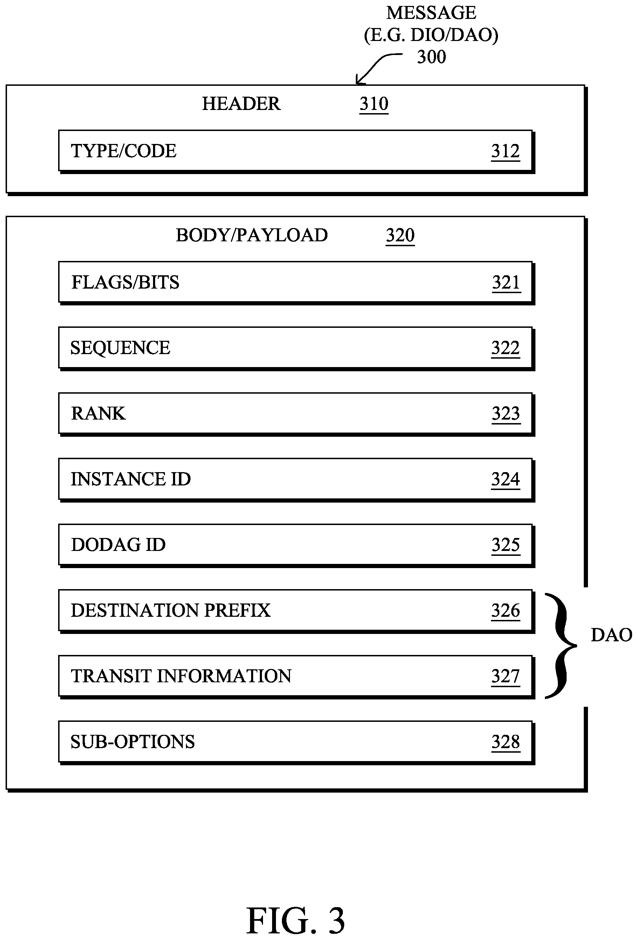

Fig. 3 illustrates an example simplified control message format 300 that may be used for discovery and route dissemination when building a DAG, e.g., as a DIO or DAO. Message 300 illustratively comprises a header 310 with one or more fields 312 that identify the type of message (e.g., a RPL control message), and a specific code indicating the specific type of message, e.g., a DIO or a DAO (or a DAG Information Solicitation). Within the body/payload 320 of the message may be a plurality of fields used to relay the pertinent information. In particular, the fields may comprise various flags/bits 321, a sequence number 322, a rank value 323, an instance ID 324, a DODAG ID 325, and other fields, each as may be appreciated in more detail by those skilled in the art. Further, for DAO messages, additional fields for destination prefixes 326 and a transit information field 327 may also be included, among others (e.g., DAO_Sequence used for ACKs, etc.). For either DIOs or DAOs, one or more additional sub-option fields 328 may be used to supply additional or custom information within the message 300. For instance, an objective code point (OCP) sub-option field may be used within a DIO to carry codes specifying a particular objective function (OF) to be used for building the associated DAG. Alternatively, sub-option fields 328 may be used to carry other certain information within a message 300, such as indications, requests, lists, etc., as may be described herein, e.g., in one or more type-length-value (TLV) fields.

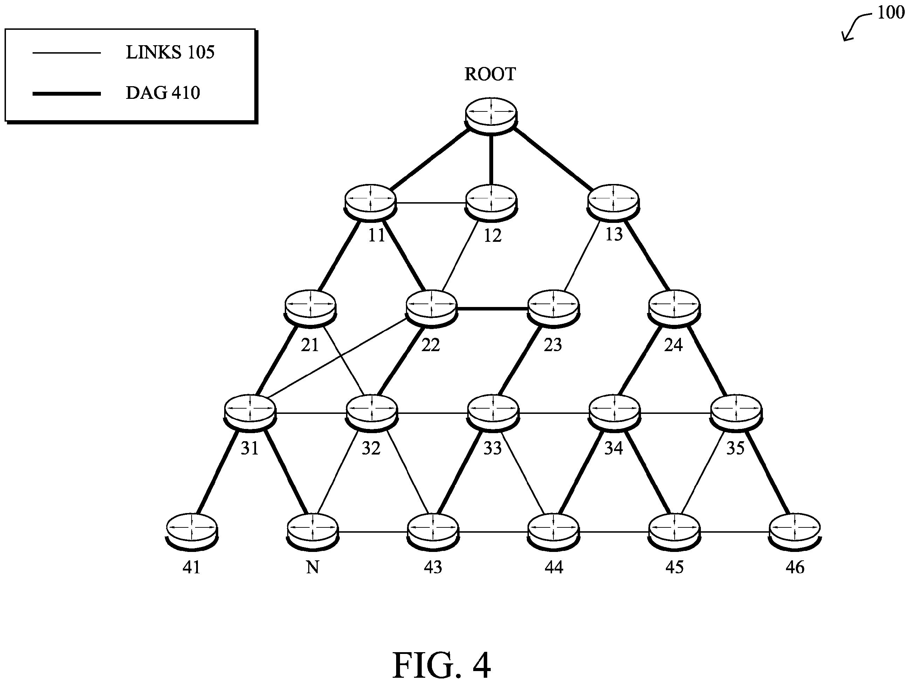

Fig. 4 illustrates an example DAG that may be created, e.g., through the techniques described above, within network 100 of Fig. 1. For instance, certain links 105 may be selected for each node to communicate with a particular parent (and thus, in the reverse, to communicate with a child, if one exists). These selected links form the DAG 410 (shown as thicker lines), which extends from the root node toward one or more leaf nodes (nodes without children). Traffic/packets 140 (shown in Fig. 1) may then traverse the DAG 410 in either the upward direction toward the root or downward toward the leaf nodes.

As noted above, it is fairly common in LLNs to have a node, e.g., node "N", that rarely communicates, yet that still must be reachable at any time. For instance, if this "low-contact" node N is battery operated, then it is particularly detrimental to use a keep-alive mechanism to maintain the routing topology built by proactive (a priori) routing protocols (e.g., RPL). For example, when node N desires to send a packet, it wakes up and usually uses a preamble technique before sending the data packet. If node N detects that link 31-N, its previous link, is broken (unavailable) at the time the data is being transmitted, node N can switch to a backup parent (e.g., node 32), or else trigger a repair.

As pointed out, however, the major issue is in the opposite direction, where if a node (e.g., the root node or other node) needs to send a packet to the low-contact node N, such as through path Root-11-21-31-N, and the last link 31-N is broken. In this instance, there is no way for the low-contact node N to know of the incoming packet, and thus no way to switch to a new parent. Essentially, using existing protocols node N has no indication that its parent (node 31 in our example) is down. Currently, the following two solutions to this problem are available: 1) Force the low-contact node N to send keep-alive messages to maintain an adjacency with its neighbor, which is usually not acceptable for battery operated node that do not send packets frequently; or 2) Use a different approach based on reactive routing, which comes at the cost of flooding the entire network when searching for a new route, which is also not desirable.

### Increased Communication with Low-Contact Nodes

The techniques herein alleviate the need to mandate the use of keep-alive or reactive routing to maintain communication with such low-contact nodes. Illustratively, the techniques identify, a priori, one or more alternate parents and use multiple paths with duplicate traffic along each path leading to the low-contact node through use of multicast techniques.

Specifically, according to one or more embodiments of the disclosure, a particular node (e.g., root node) in a DAG in a computer network may identify a low-contact (e.g., wireless) node in the DAG that is at risk of having an invalid path when attempts are made to reach the low-contact node. In response, the particular node may identify neighbors of the low-contact node, and may establish a multicast tree from the particular node to the low-contact node through a plurality of the neighbors to reach the low-contact node. When sending traffic to the low-contact node, the particular node sends the traffic on the multicast tree, wherein each of the plurality of neighbors attempts to forward the traffic to the low-contact node. Also, as described below, according to one or more additional embodiments of the disclosure, the low-contact node itself indicates its status to the particular/root node, along with its list of neighbors in order to receive the multicast traffic.

Illustratively, the techniques described herein may be performed by hardware, software, and/or firmware, such as in accordance with DAG process 246, which may contain computer executable instructions executed by the processor 220 to perform functions relating to the novel techniques described herein, e.g., in conjunction with routing process 244. For example, the techniques herein may be treated as extensions to conventional protocols, such as the RPL protocol, and as such, would be processed by similar components understood in the art that execute the RPL protocol, accordingly.

Operationally, the techniques herein begin with identifying a low-contact node (also referred to as a "sleepy node") in the DAG, such as node N. A low-contact node, as noted above, is one that is at risk of having an invalid path when attempts are made to reach the low-contact node. For example, a node not participating in keep-alive message transmission (e.g., incapable or not configured to do so) and/or infrequently transmitting traffic. Other factors, such as energy constraints (e.g., battery operated), may translate into the potential high risk to not have a valid path, should a packet be sent to N from any other node in the network. For instance, while these low-contact nodes may not have to transmit themselves, there may be reasons to contact the low-contact node, such as critical traffic like alarms, emergency action, configuration updates, etc. Another criteria may be that the links connecting the node are identified as extremely lossy.

In one embodiment, the identification of a low-contact node is made by a "responsible node" in the DAG other than the low-contact node itself. For instance, the responsible node may be the root node or the DAG, a head-end device (e.g., in the WAN), or else any other node in the DAG designated as being responsible for ensuring that messages addressed to a low-contact node reach their destination. In this embodiment, the responsible node may identify low-contact nodes based on topology knowledge, including device configurations and capabilities (battery operated, wireless, keep-alive capable, etc.), as well as based on network statistics (e.g., number of traffic transmissions), or other factors.

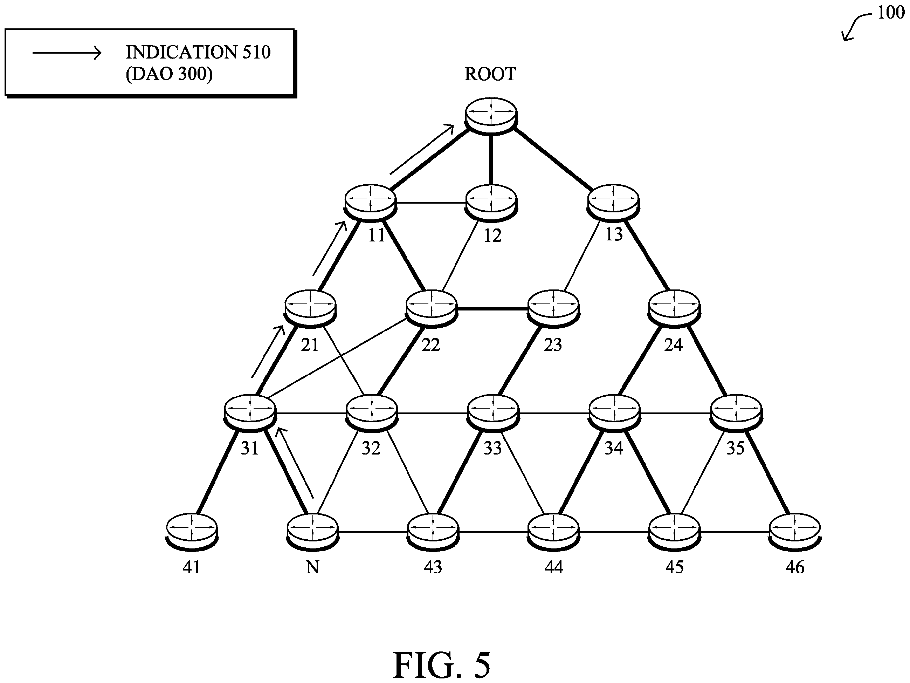

In another embodiment, nodes in the DAG themselves may determine whether their status is a low-contact node (sleepy node), such as based on any of the factors above, or on local configuration. In this scenario, when a node determines that it is a low-contact node, it may transmit an indication of such to the root node of the DAG (or another configured responsible node). Fig. 5 illustrates an example message exchange where node N, after determining that it is a low-contact node, may transmit indication messages 510 (e.g., DAOs 300 with an extension to sub-option field 328) upstream toward the root node to inform the root and/or any other responsible node along the path of its status. The root node may then receive the indication 510 (indicating that the low-contact node N is a low-contact node), and may thus identify the low-contact node in response.

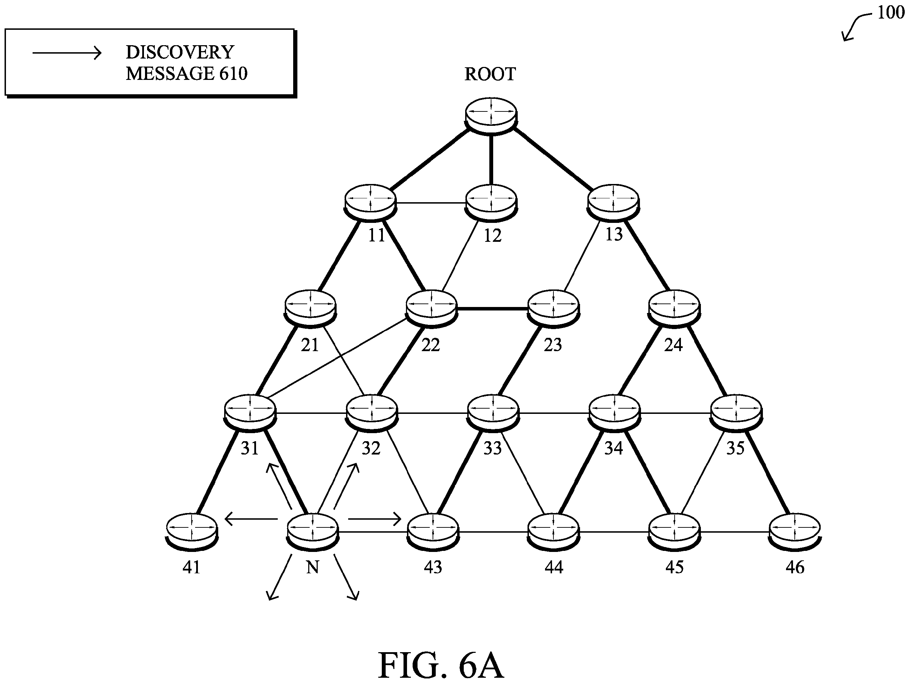

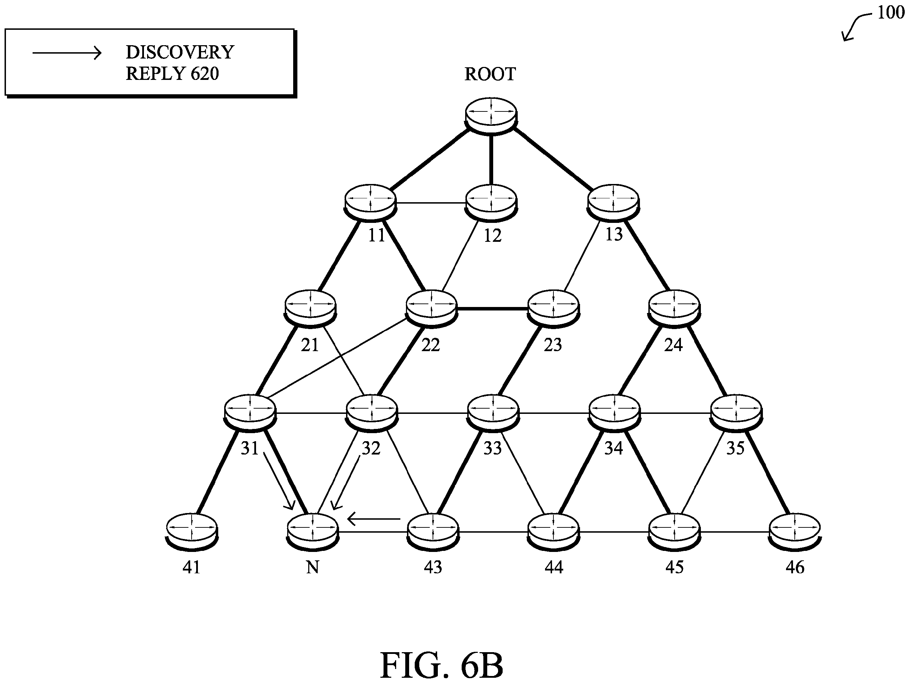

Once a low-contact node (e.g., N) is identified, the techniques herein next identify a set (list) of neighbors of the low-contact node. For example, in the first embodiment mentioned above, this determination may be made based on the known topology information, such as determining that node N has "links" (wired links or wireless communication with) to nodes 43, 41, 32, and 31. According to the second embodiment mentioned above, however, the low-contact node may be configured to discover its own neighbors. In particular, in an illustrative embodiment, as shown in Fig. 6A, the low-contact node N may transmit a discovery message 610 (e.g., a RPL "DIS" message), and any neighbor that receives the discovery message 610 may reply to the low-contact node. Illustratively, as shown in Fig. 6B, nodes 43, 32, and 31 may receive the discovery message, and may return a reply message 620 to the node N. Node N, accordingly, may receive the replies, and identify the neighbors in the vicinity based thereon. The low-contact node may include this list of neighbors within the indication 510 (Fig. 5), such that the responsible node (e.g., root node) may examine the indication message to identify the set of neighbors.

The responsible node (e.g., root node) may use the gathered information (low-contact node and its neighbors) and may establish and/or select a multicast address group from a set of multicast groups dedicated for the techniques herein. That is, a certain subset of available multicast addresses may be reserved for use with improving communications with low-contact nodes, as described herein. For this selected group, the responsible node may establish (or build) a multicast tree from itself to the low-contact node through a plurality of the neighbors to reach the low-contact node. Furthermore, the "special" multicast group is communicated to the neighbors of the low-contact nodes so that they subscribe to the multicast group.

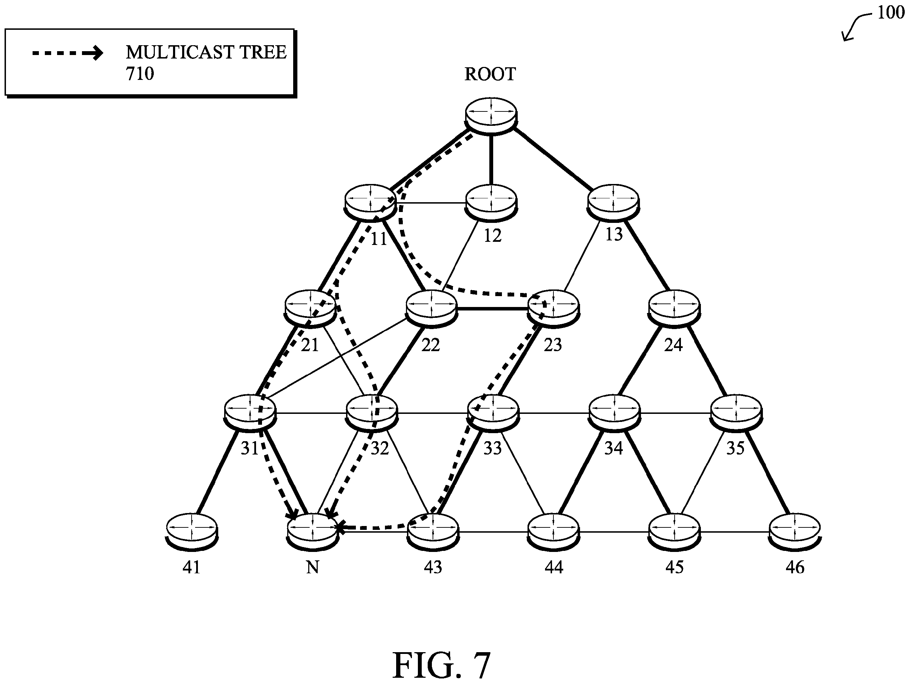

Fig. 7 illustrates an example multicast tree 710 (dotted lines) that may be established along the DAG toward the low-contact node N. Notably, while the multicast tree is shown terminating at the low-contact node N, in alternative embodiments the tree may terminate at the neighbor nodes (31, 32, and 43), which may then be configured to forward multicast traffic to the low-contact node N, accordingly.

The responsible node may inform the low-contact node N of the particular multicast group (corresponding to the multicast tree 710) as a unicast message to N (e.g., a direct message or a DIO 300). Upon receiving this multicast group identification, the low-contact node may join (register to) the multicast group, thus becoming a listener for the corresponding multicast address (multicast traffic).

Once the multicast group and tree is established, any traffic destined to the low-contact node may be sent from the responsible node to the low-contact node as multicast traffic on the multicast tree. In one embodiment, only certain traffic, such as critical traffic (alarms, high priority traffic, etc.) is sent as multicast traffic, while other traffic may be sent to the low-contact node as conventional unicast traffic on the DAG. In another embodiment, the multicast tree 710 is used in response to failure of a unicast packet (e.g., lack of acknowledgment or ACK from the low-contact node). In still another embodiment, all traffic is simply sent as multicast traffic on the tree 710. Notably, while the root node is an illustrative originator of the traffic and an entry node into the multicast tree 710 (natively sent as a multicast packet), a responsible node may be any node along the DAG that receives a unicast packet destined to the low-contact node, and may insert the unicast packet into the multicast tree as multicast traffic (encapsulating the unicast packet in an appropriate multicast packet), accordingly.

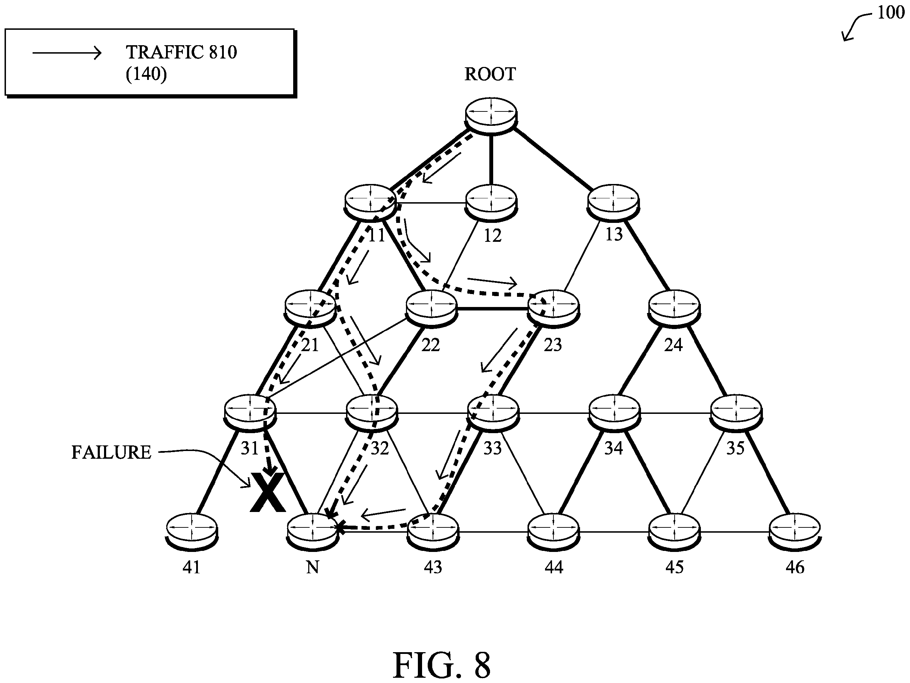

As shown in Fig. 8, multicast traffic 810 (e.g., 140) may be transmitted from the root node to the low-contact node N along the established multicast tree 710. Each of the pre-identified neighbors (nodes 31, 32, and 43) may receive the multicast traffic 810, and attempts to forward the traffic to the low-contact node N. Specifically, in one embodiment where the low-contact node joins the multicast tree, this traffic may be in the form of the transmitted multicast packets. However, in another embodiment, the traffic may be unicast packets that have been decapsulated from the multicast traffic. That is, the identified neighbors may determine (e.g., based on an indication within the multicast traffic of the special destination of the traffic) that the next hop is the destination low-contact node, and as such, may decapsulate the multicast traffic to produce a unicast packet (unicast traffic) for forwarding.

In the event that any of the communication links between the low-contact node and its neighbors fails since the last time that node N updated its routing information, particularly the previously utilized (previously active) link between parent node 31 and node N as shown, the probability of the traffic reaching the low-contact node is increased/improved. For example, though the link between node 31 and N has failed (albeit, unknown to node N), nodes 32 and 43 transmit the traffic 810, in duplicate, to the low-contact node N, ensuring its delivery. Notably, before sending multicast packets to their final destination, a randomized timer may be used to avoid all termination points (neighbors) simultaneously sending multicast packets, and thus potentially ending up with collisions.

The low-contact node may then, in most cases receive the traffic 810 from one or more of the neighbors. (Note that in the event that the low-contact node still does not receive the traffic, then the node is isolated from any neighbors and nothing could be done in any case.) When duplicate multicast is received, the low-contact node may simply ignore all but a first received multicast traffic message. Furthermore, upon receiving the multicast data packet (traffic 810), node N may also take the opportunity to update its neighbors table based on from which neighbors the multicast traffic is received, or, more particularly, from which neighbors the traffic is not received (used to detect a link/node failure). In the example in Fig. 8, node 31 may be removed from the list of viable parents/neighbors, leaving nodes 32 and 43. In this instance, also, since the lost connection was with the original parent node 31, the low-contact node may, according to its routing table, either switch to an already identified back-up parent, or issue a new discovery message 510 and/or trigger a local repair of the DAG.

Accordingly, to reach the low-contact node, the entire network need not be flooded (just the multicast group), and the low-contact node need not maintain a keep-alive exchange. Instead, when sending traffic to the low-contact node (by nature, infrequently), redundant traffic is transmitted to improve the communication opportunities to reach the node in the event route availability has changed in the interim.

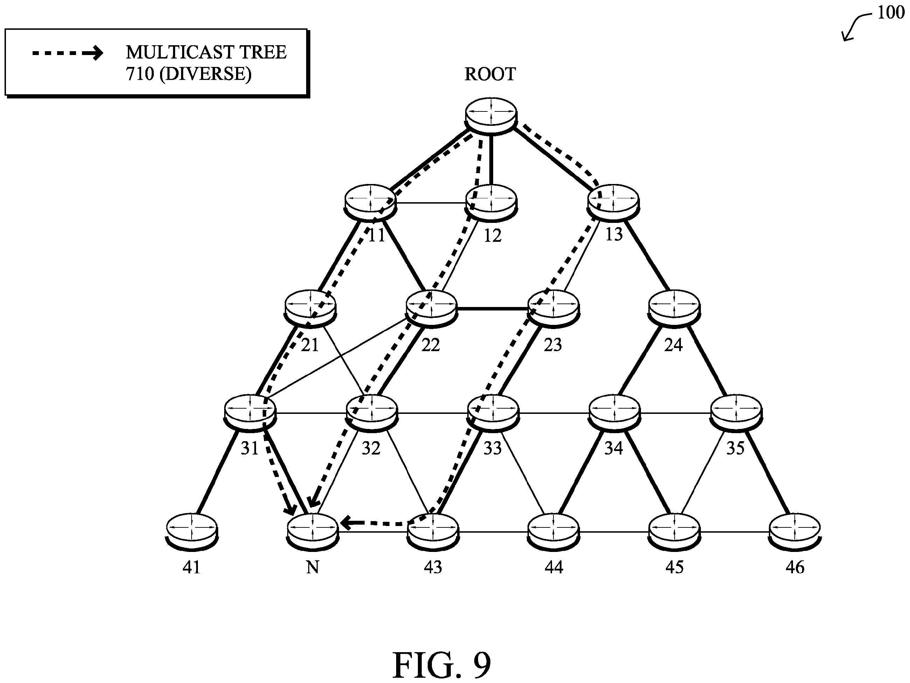

Notably, it may be beneficial to ensure that the multicast tree 710 traverses as diverse of a path as possible (e.g., completely diverse, or diverse wherever possible) to further increase the communication opportunity to reach the low-contact node. For example, based on the type of node N or the type of traffic to be sent to node N, the multicast tree 710 may be established as a diverse multicast tree, as shown in Fig. 9. In certain embodiments, the low-contact node may explicitly request, e.g., within indication 510 (for example, a "critical flag" in sub-option fields 328), that the multicast tree 710 be established ensuring path diversity (as much as possible, at least). (Note that two separate trees may be maintained, one conventional tree, and one diverse tree. However, in most instances, this may not be necessary or useful.) In this manner, should any node along the multicast tree fail, and not simply a neighbor node of the low-contact node, a multicast traffic packet should still reach the low-contact node, accordingly.

In addition to diverse multicast trees, Fig. 9 also illustrates the point that a multicast tree need not specifically traverse the underlying DAG 410. In one embodiment, as shown in Fig. 7, the tree 710 did traverse the DAG, though in other, less DAG-restrictive embodiments, the tree may traverse any path necessary/desired to reach the low-contact node N, in essence creating an independent sub-DAG to the low-contact node.

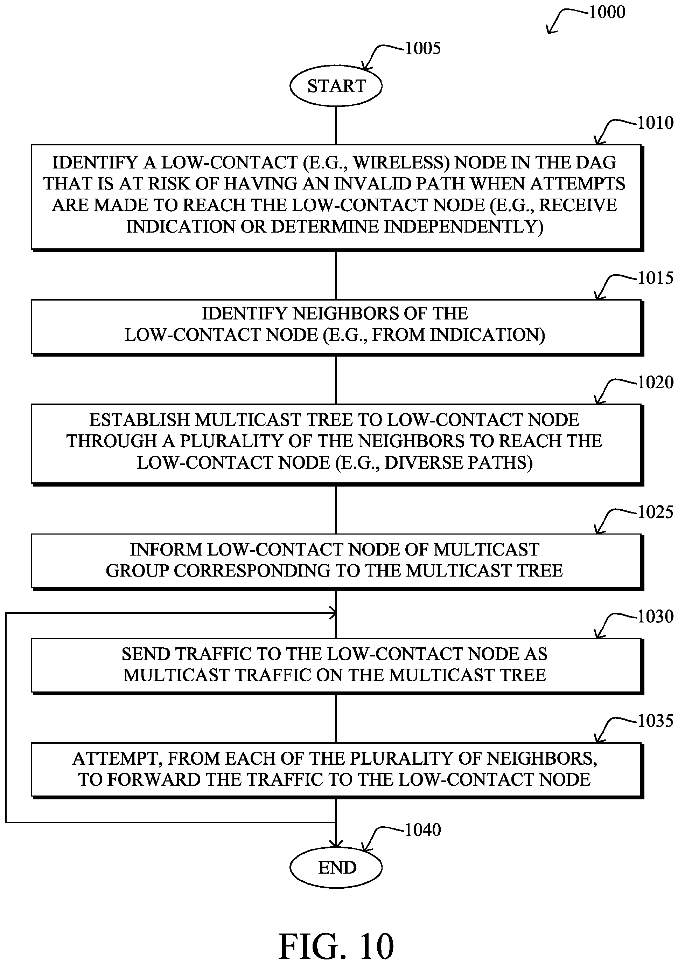

In closing, Fig. 10 illustrates an example simplified procedure for increasing communication opportunity with low-contact nodes in accordance with one or more embodiments described herein, e.g., from the perspective of a particular node in the DAG (e.g., root node). The procedure 1000 starts at step 1005, and continues to step 1010, where the particular node identifies a low-contact node in the DAG (e.g., node N) that is at risk of having an invalid path when attempts are made to reach that low-contact node. As described above, step 1010 may be based on receiving an indication message 510, or may be determined independently based on network topology information. Further, in step 1015, neighbors of the low-contact node are identified, again based on the indication 510 or topology information.

In step 1020, a multicast tree 710 may be established to the low-contact node through a plurality of the neighbors (e.g., terminating at the neighbors as mentioned above) to reach the low-contact node, and in step 1025 the low-contact node (N) may be informed of the corresponding multicast group. Note that the established tree 710 may be diverse, as noted above, such as in response to an explicit request from the low-contact node.

With the tree 710 in place, in step 1030 traffic may be sent to the low-contact node as multicast traffic. For instance, certain, e.g., high priority, traffic may be sent as multicast traffic, or else all traffic may be sent as such (e.g., from a responsible node or root node, as mentioned above). Upon receiving the traffic on the tree, each of the plurality of neighbors may attempt in step 1035 to forward the traffic to the low-contact node, accordingly (e.g., in a multicast packet or as a decapsulated unicast packet, as described above). The procedure 1000 may then end in step 1040, e.g., if only one packet needed to be sent to the low-contact node (such as for on-demand multicasting), or else the procedure may return to step 1030 to continue sending traffic to the low-contact node as needed over the established tree 710.

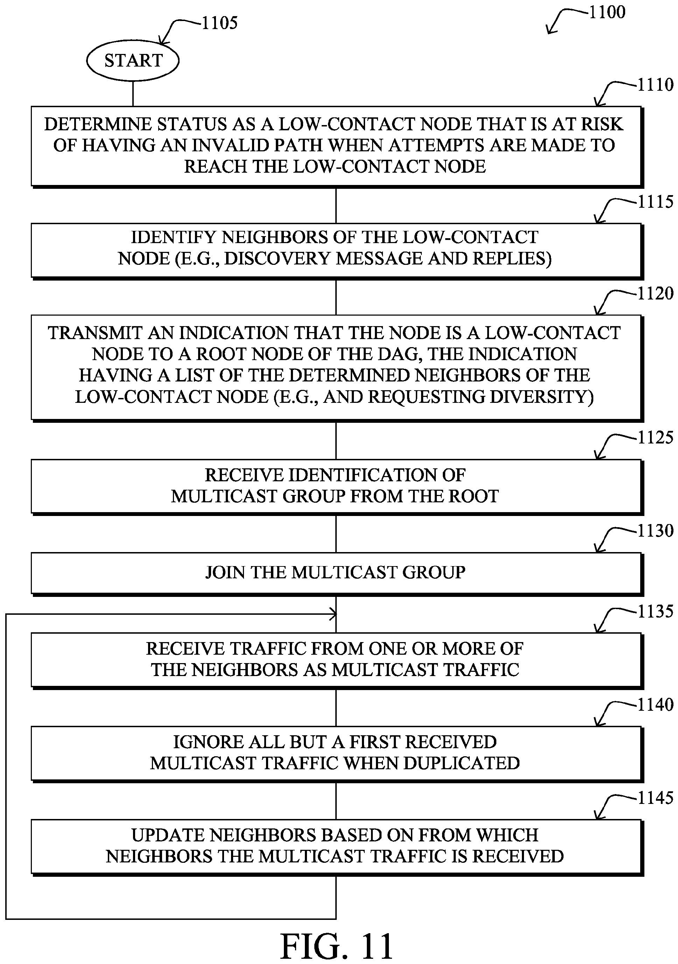

Additionally, Fig. 11 illustrates an example simplified procedure for increasing communication opportunity with low-contact nodes in accordance with one or more embodiments described herein, e.g., from the perspective of the low-contact node. The procedure 1100 starts at step 1105, and continues to step 1110, where a node (e.g., N) may determine its status as a low-contact node that is at risk of having an invalid path when attempts are made to reach the low-contact node, particularly as described in more detail above. Accordingly, in step 1115, the low-contact node N may identify its neighbors, e.g., through discovery messages 610 and replies 620. Once the set of neighbors is identified, the low-contact node may transmit an indication 510 to the root node that the node N is a low-contact node in step 1120. In one embodiment, the indication may comprise a list of the identified neighbors. Also, as noted above, the indication may, in one embodiment, request path diversity in an established multicast tree to the low-contact node.

In step 1125, notably in one embodiment, the low-contact node N may receive identification of a multicast group from the root corresponding to the resultant multicast tree 710 created in response to the low-contact node (identifying itself as a "sleepy node"), and in step 1130, then, the low-cost node may join the identified multicast group, and listens for traffic for that group. Alternatively, the procedure 1100 may proceed from step 1120 to step 1135, where the low-contact node does not join the multicast group. In particular, in step 1135, the low-contact node may receive traffic 810 from one or more of the neighbors, e.g., as multicast traffic or as decapsulated unicast traffic, assuming at least one neighbor is still able to communicate with the low-contact node. In step 1140 the low-contact node may ignore all but a first received multicast traffic when duplicate traffic is received (where more than one neighbor is still able to communicate). As noted above, if only certain neighbors are able to reach the low-contact node, the low-contact node may update its neighbor list, or, in the event a selected parent is unable to reach the low-contact node, may perform (or request/trigger) a reroute event. The procedure 1100 may return to step 1135 to receive additional traffic from the neighbors, or else may end if no further traffic is to be received.

The novel techniques described herein, therefore, increase communication opportunities with low-contact nodes in a computer network. In particular, by building a dedicated multicast tree through each neighbor node in the vicinity of a low-contact node, the novel techniques allow use of the tree to send multicast packets (otherwise sent unicast) to that low-contact node, thus increasing communication opportunity (e.g., generally ensuring packet delivery) without requiring expensive routing adjacency maintenance of the low-contact node. Specifically, the techniques herein avoid forcing a node to send keep-alive messages in proactive routing to maintain routing adjacency, or to use any form of reactive routing mechanism, which can be very expensive in terms of energy for the whole network. Further, the dynamic techniques above provide functionality that would be difficult, if not practically impossible, to perform manually, particularly for the potentially large number of nodes in a network.

While there have been shown and described illustrative embodiments that increase communication opportunities with low-contact nodes in a computer network, it is to be understood that various other adaptations and modifications may be made within the scope of the embodiments herein. For example, the embodiments have been shown and described herein with relation to LLNs, and more particular, to the RPL protocol. However, the embodiments in their broader sense are not as limited, and may, in fact, be used with other types of networks and/or protocols utilizing DAG routing (e.g., distance vector protocols) with low-contact nodes. For instance, while the techniques describe primarily wireless low-contact nodes, any low-contact node, particularly those not participating in keep-alive exchanges, may benefit from the techniques herein.

The foregoing description has been directed to specific embodiments. It will be apparent, however, that other variations and modifications may be made to the described embodiments, with the attainment of some or all of their advantages. For instance, it is expressly contemplated that the components and/or elements described herein can be implemented as software being stored on a tangible (non-transitory) computer-readable medium (e.g., disks/CDs/etc.) having program instructions executing on a computer, hardware, firmware, or a combination thereof. Accordingly this description is to be taken only by way of example and not to otherwise limit the scope of the embodiments herein. Therefore, it is the object of the appended claims to cover all such variations and modifications as come within the scope of the invention as defined in the appended claims.

## Claims

1. A method, comprising:
identifying (1010), by a particular node in a directed acyclic graph (DAG) in a computer network, a low-contact node in the DAG;
identifying (1015) neighbors of the low-contact node;
establishing (1020) a multicast tree from the particular node to the low-contact node through a plurality of the neighbors to reach the low-contact node; and
sending (1030) traffic from the particular node to the low-contact node as multicast traffic on the multicast tree, wherein each of the plurality of neighbors attempts to forward the traffic to the low-contact node.

2. The method as in claim 1, wherein the low-contact node is identified as a node that is at risk of having an invalid path when attempts are made to reach the low-contact node, wherein the low-contact node is one of either a node not participating in keep-alive message transmission or a node infrequently transmitting traffic.

3. The method as in claim 1, wherein determining the low-contact node comprises:
receiving an indication from the low-contact node that the low-contact node is a low- contact node, optionally wherein the indication comprises a list of neighbors of the low- contact node, and where identifying the neighbors comprises:
examining the indication from the low-contact node to identify the neighbors of the low-contact node.

4. The method as in claim 1, further comprising:
informing the low-contact node of a multicast group corresponding to the multicast tree.

5. The method as in claim 1, wherein establishing the multicast tree comprises:
ensuring path diversity where available within the DAG, optionally further comprising:
receiving a request from the low-contact node for path diversity within the multicast tree.

6. The method as in claim 1, wherein the particular node is a root node of the DAG.

7. The method as in claim 1, wherein sending comprises sending all traffic to the low-contact node as multicast traffic on the multicast tree.

8. An apparatus, comprising:
one or more network interfaces;
a processor coupled to the network interfaces and adapted to execute one or more processes; and
a memory configured to store a process executable by the processor, the process when executed operable to perform all the steps of the method according to any preceding claim.

## Patentansprüche

1. Verfahren, das Folgendes umfasst:
Identifizieren (1010) durch einen bestimmten Knoten in einem gerichteten azyklischen Graphen (Directed Acyclic Graph, DAG) in einem Computernetz, eines Niedrigkontaktknotens in dem DAG;
Identifizieren (1015) von Nachbarn des Niedrigkontaktknotens;
Erstellen (1020) eines Multicast-Baumes von dem bestimmten Knoten zu dem Niedrigkontaktknoten durch eine Vielzahl von Nachbarn, um den Niedrigkontaktknoten zu erreichen; und
Senden (1030) von Datenverkehr von dem bestimmten Knoten zu dem Niedrigkontaktknoten als Multicast-Datenverkehr auf dem Multicast-Baum, wobei jeder der Vielzahl von Nachbarn versucht, den Datenverkehr zu dem Niedrigkontaktknoten weiterzuleiten.

2. Verfahren nach Anspruch 1, wobei der Niedrigkontaktknoten als ein Knoten identifiziert wird, der in Gefahr ist, einen ungültigen Pfad aufzuweisen, wenn Versuche unternommen werden, den Niedrigkontaktknoten zu erreichen, wobei der Niedrigkontaktknoten entweder ein Knoten ist, der nicht an einer Übertragung einer Aufrechterhaltungsnachricht teilnimmt, oder ein Knoten ist, der Datenverkehr selten sendet.

3. Verfahren nach Anspruch 1, wobei das Bestimmen des Niedrigkontaktknotens Folgendes umfasst:
Empfangen eines Hinweises von dem Niedrigkontaktknoten, die angibt, dass der Niedrigkontaktknoten ein Niedrigkontaktknoten ist, optional wobei der Hinweis eine Liste von Nachbarn des Niedrigkontaktknotens umfasst und wobei die Identifizierung der Nachbarn Folgendes umfasst:
Untersuchen des Hinweises von dem Niedrigkontaktknoten, um die Nachbarn des Niedrigkontaktknotens zu identifizieren.

4. Verfahren nach Anspruch 1, das ferner Folgendes umfasst:
Informieren des Niedrigkontaktknotens über eine Multicast-Gruppe, die dem Multicast-Baum entspricht.

5. Verfahren nach Anspruch 1, wobei das Erstellen des Multicast-Baumes Folgendes umfasst:
Sicherstellen der Pfadvielfalt, soweit innerhalb des DAG verfügbar, wobei dies optional ferner Folgendes umfasst:
Empfangen einer Anfrage von dem Niedrigkontaktknoten nach Pfaddiversität innerhalb des Multicast-Baumes.

6. Verfahren nach Anspruch 1, wobei der jeweilige Knoten ein Wurzelknoten des DAG ist.

7. Verfahren nach Anspruch 1, wobei das Senden das Senden des gesamten Datenverkehrs zu dem Niedrigkontaktknoten als Multicast-Datenverkehr auf dem Multicast-Baum umfasst.

8. Vorrichtung, die Folgendes umfasst:
eine oder mehrere Netzschnittstellen und
einen Prozessor, der mit den Netzschnittstellen gekoppelt ist und dafür ausgelegt ist, einen oder mehrere Prozesse auszuführen; und
einen Speicher, der dafür konfiguriert ist, einen Prozess zu speichern, der von dem Prozessor ausgeführt werden kann, wobei das Verfahren, wenn es ausgeführt wird, in der Lage ist, alle Schritte des Verfahrens nach einem der vorhergehenden Ansprüche auszuführen.

## Revendications

1. Procédé consistant à :
identifier (1010), par un noeud particulier d'un graphe orienté acyclique (DAG) d'un réseau informatique, un noeud à faible contact du DAG ;
identifier (1015) des voisins du noeud à faible contact ;
établir (1020) un arbre de diffusion multidestinataire du noeud particulier au noeud à faible contact par l'intermédiaire d'une pluralité de voisins parmi les voisins afin d'atteindre le noeud à faible contact ; et
envoyer (1030) du trafic du noeud particulier au noeud à faible contact en guise de trafic de diffusion multidestinataire sur l'arbre de diffusion multidestinataire, chaque voisin de la pluralité de voisins essayant de transférer le trafic au noeud à faible contact.

2. Procédé selon la revendication 1, dans lequel le noeud à faible contact est identifié comme étant un noeud courant un risque d'avoir un chemin non valide lorsque des tentatives d'atteindre le noeud à faible contact sont faites, le noeud à faible contact étant soit un noeud ne participant pas à la transmission d'un message de liaison persistante, soit un noeud transmettant du trafic peu fréquemment.

3. Procédé selon la revendication 1, dans lequel la détermination du noeud à faible contact consiste à :
recevoir une indication en provenance du noeud à faible contact indiquant que le noeud à faible contact est un noeud à faible contact, éventuellement dans lequel l'indication comprend une liste de voisins du noeud à faible contact, et dans lequel l'identification des voisins consiste à :
examiner l'indication en provenance du noeud à faible contact afin d'identifier les voisins du noeud à faible contact.

4. Procédé selon la revendication 1, consistant en outre à :
informer le noeud à faible contact d'un groupe de diffusion multidestinataire correspondant à l'arbre de diffusion multidestinataire.

5. Procédé selon la revendication 1, dans lequel l'établissement de l'arbre de diffusion multidestinataire consiste à :
assurer la diversité des chemins disponibles sur le DAG, et éventuellement consistant en outre à :
recevoir, en provenance du noeud à faible contact, une demande de diversité de chemins dans l'arbre de diffusion multidestinataire.

6. Procédé selon la revendication 1, dans lequel le noeud particulier est un noeud racine du DAG.

7. Procédé selon la revendication 1, dans lequel l'envoi consiste à envoyer tout le trafic au noeud à faible contact sous forme de trafic de diffusion multidestinataire sur l'arbre de diffusion multidestinataire.

8. Appareil, comprenant :
une ou plusieurs interfaces de réseau ;
un processeur couplé aux interfaces de réseau et conçu pour exécuter un ou plusieurs processus ; et
une mémoire conçue pour stocker un processus exécutable par le processeur, le processus, lorsqu'il est exécuté, permettant de réaliser toutes les étapes du procédé selon l'une quelconque des revendications précédentes.
